# EUROPÄISCHE PATENTSCHRIFT

(11) **EP 0 775 911 B1**
(45) Veröffentlichungstag und Bekanntmachung des Hinweises auf die Patenterteilung: **29.03.2000**
(21) Anmeldenummer: 96118455.3
(22) Anmeldetag: 18.11.1996
(51) Int. Cl.: G01N 29/26, G21C 17/00, G01N 29/22

(54) **Vorrichtung und Verfahren zum Prüfen und/oder Bearbeiten eines rohrförmigen Werkstückes**
Method and apparatus for examining and/or processing a tubular piece
Procédé et dispositif d'examen et/ou de traitement d'une pièce tubulaire

(30) Priorität: 21.11.1995 DE 19543391
(43) Veröffentlichungstag der Anmeldung: 28.05.1997
(73) Patentinhaber: SIEMENS AKTIENGESELLSCHAFT, 80333 München (DE)
(72) Erfinder: Kastl, Hans, Dipl.-Ing. (FH), 91058 Erlangen (DE); Haas, Erich, 90607 Rückersdorf (DE)

(56) Entgegenhaltungen:
- EP-A- 0 081 214
- EP-A- 0 412 396
- DE-A- 2 936 660
- DE-A- 3 329 483
- DE-A- 3 937 094

## Beschreibung

Die Erfindung bezieht sich auf eine Vorrichtung zum Prüfen und/oder Bearbeiten eines rohrförmigen Werkstückes, mit einem Basisträger, der zwei Schenkel mit freien Enden besitzt, und der eine Führung für einen auf einer Kreisbahn verfahrbaren Träger für ein Prüf- bzw. Bearbeitungssystem umfaßt. Sie betrifft ferner ein Verfahren zum Prüfen und/oder Bearbeiten eines rohrförmigen Werkstückes.

Das Prüfen und/oder Bearbeiten von rohrförmigen Werkstücken, insbesondere die Ultraschallprüfung von Schweißnähten in Rohrleitungen, kann insbesondere bei Rohrleitungen mit einer Nennweite kleiner als 100 mm nur unter erheblichem personellen Aufwand manuell erfolgen. Das Prüfen und/oder Bearbeiten ist insbesondere in strahlenbelasteten Räumlichkeiten problematisch, da dort ein längerer Aufenthalt des Personals aus gesundheitlichen Gründen vermieden werden soll.

In den deutschen Offenlegungsschriften 42 10 418 und 39 37 094 sind Vorrichtungen offenbart, die die spezielle Funktion haben, Rohrflansche auszuwechseln oder zwei Rohre miteinander durch Zusammenschweißen zu verbinden. Beide Vorrichtungen sind jeweils nur für eine spezielle Anwendung konzipiert worden. Sie sind somit nicht universell einsetzbar. Desweiteren ist die Handhabung der Vorrichtungen aufwendig, da sie aus mehreren Komponenten bestehen, die einzeln an den Bearbeitungsobjekten befestigt werden müssen.

Desweiteren sind aus der europäischen Patentanmeldung 0 412 396 und den deutschen Offenlegungsschriften 33 37 635 und 33 29 483 Vorrichtungen zum Prüfen eines rohrförmigen Werkstückes bekannt.

Die Vorrichtung der EP 0 412 396 A2 zeigt einen Basisträger, der zwei Schenkel mit freien Enden enthält, und der eine Führung für einen in ihr auf einer Kreisbahn verfahrbaren Träger enthält, auf dem ein Prüfsystem verfahrbar angeordnet ist. Der Träger ist sichelförmig ausgebildet und bildet zusammen mit dem Basisträger und einem weiteren Sichelelement eine teleskopartige ausfahrbare Anordnung.

In der Praxis besteht jedoch der Bedarf nach einer einfach zu handhabenden Vorrichtung in einer kompakten und verschleißfesten Ausführungsform, deren Bedienung mit geringem personellen Aufwand verknüpft ist und die es erlaubt, verschiedene Funktionen des Bearbeitens und/oder Prüfens auszuführen, ohne gleich die gesamte Vorrichtung auswechseln zu müssen.

Ein weiteres Problem ist die Zugänglichkeit der rohrförmigen Werkstücke, beispielsweise von Rohrleitungen. Rohrleitungen verlaufen häufig in Wandnähe und in Ecken und sind somit für eine Prüfung und/oder Bearbeitung auf dem gesamten Umfang nur schwer zugänglich. Hier besteht der Bedarf nach einer gewichtsmäßig leichten Vorrichtung mit einer geringen radialen Bauhöhe bei maximalem Prüfungs- und/oder Bearbeitungsbereich nach Fixierung der Vorrichtung an der Rohrleitung.

Desweiteren muß eine weitgehend universelle Einsetzbarkeit verlangt werden. Es sollten nicht nur gerade verlaufende rohrförmige Werkstücke, sondern auch konisch verlaufende rohrförmige Werkstücke oder Rohre im Krümmerbereich geprüft und/oder bearbeitet werden können.

Der Erfindung liegt nun die Aufgabe zugrunde, eine Vorrichtung zum Prüfen und/oder Bearbeiten eines rohrförmigen Werkstückes anzugeben, die vielseitig einsetzbar ist. Außerdem soll ein Verfahren zum Prüfen und/oder Bearbeiten eines rohrförmigen Werkstückes angegeben werden.

Die erstgenannte Aufgabe wird bezogen auf die eingangs genannte Vorrichtung gemäß der Erfindung dadurch gelöst, daß auf dem Träger ein Ausleger für das Prüf- bzw. Bearbeitungssystem angeordnet ist, wobei das Prüf- bzw. Bearbeitungssystem auf dem Träger verfahrbar angeordnet ist, und dadurch daß zum Verfahren des Trägers ein in der Führung gelagertes, kreisförmig gebogenes Laufsegment zum Überbrücken des Raumes zwischen den freien Enden der Schenkel des Basisträgers vorgesehen ist, wobei die Kreisbogenlänge des Laufsegments größer ist als die Kreisbogenlänge zwischen den freien Enden.

Die zweitgenannte Aufgabe wird gemäß der Erfindung gelöst durch ein Verfahren zum Prüfen und/oder Bearbeiten eines rohrförmigen Werkstückes,
a) bei dem ein Basisträger mit mindestens zwei Spannpratzen am rohrförmigen Werkstück zentriert wird,
   wobei der Basisträger zwei Schenkel mit freien Enden besitzt und eine Führung für ein in ihr auf einer Kreisbahn verfahrbares Laufsegment eines Trägers für einen Ausleger umfaßt, wobei die Kreisbogenlänge des Laufsegments größer ist als die Kreisbogenlänge zwischen den freien Enden, und
b) bei dem ein auf dem Ausleger angeordnetes verfahrbares Prüf- bzw. Bearbeitungssystem verfahren wird.

Eine solche Vorrichtung ist wegen ihrer kompakten und verschleißfesten Ausführungsform in der Praxis einfach zu handhaben. Die Bedienung ist mit geringem personellen Aufwand verbunden, da nach Fixierung der Vorrichtung am rohrförmigen Werkstück das Prüf- und/oder Bearbeitungssystem fernbedient werden kann. Sollen verschiedene Funktionen des Prüfens und/ oder Bearbeitens ausgeführt werden, so ist es ausreichend, vor Ort nur das Prüf- und/oder Bearbeitungssystem auszuwechseln. Nach Fixierung der Vorrichtung am zylindrischen Werkstück kann somit das rohrförmige Werkstück auf seinem gesamten Umfang geprüft oder bearbeitet werden. Rohrförmige Werkstücke, insbesondere Rohrleitungen, sind häufig in Wandnähe und in Ecken angeordnet und somit für eine Prüfung und/oder Bearbeitung auf dem gesamten Umfang schwer zugänglich. Mit dieser gewichtsmäßig leichten Vorrichtung - bei einer geringen radialen Bauhöhe - sind nunmehr auch diese Rohrleitungen der Bearbeitung zugänglich. Damit ist eine weitgehend universelle Einsetzbarkeit gegeben. Es können nicht nur gerade verlaufende rohrförmige Werkstücke, sondern auch konisch verlaufende rohrförmige Werkstücke oder Rohre im Krümmerbereich geprüft und/oder bearbeitet werden.

Vorzugsweise sind auf dem Basisträger Laufrollen als Führung für das Laufsegment angeordnet. Diese Laufrollen ermöglichen ein spielfreies Verfahren des Laufsegments gegenüber dem Basisträger.

Insbesondere ist die Motorwellenachse eines ersten Motors zum Antreiben des verfahrbaren Trägers radial zu der Kreisbahn an dem Basisträger angeordnet. Das Gehäuse des Motors kann dabei als Handgriff dienen. Der erste Motor mit seinem Gehäuse kann somit außer zum Antrieb auch zum bequemen Tragen der Vorrichtung benutzt werden.

In einer weiteren Ausgestaltung ist der Ausleger im wesentlichen senkrecht zur Ebene der Kreisbahn positionierbar. Nach Fixierung der Vorrichtung am rohrförmigen Werkstück kann demzufolge je nach geometrischer Auslegung des Auslegers eine größere Fläche auf dem Umfang des rohrförmigen Werkstückes geprüft und/oder bearbeitet werden.

Insbesondere ist ein mit einem Inkremental-Drehgeber gekoppelter zweiter Motor vorgesehen. Dieser kann das Prüf- und/oder Bearbeitungssystem über eine Gewindespindel antreiben.

Vorzugsweise sind mindestens zwei Spannpratzen für eine Fixierung und mittige Ausrichtung des Basisträgers am rohrförmigen Werkstück vorgesehen.

Weitere vorteilhafte Ausgestaltungen sind in den Unteransprüchen beschrieben.

Zur weiteren Erläuterung der Erfindung wird auf das Ausführungsbeispiel der Zeichnung verwiesen. Es zeigen:
- FIG 1: eine Aufsicht einer Vorrichtung zum Prüfen und/oder Bearbeiten eines rohrförmigen Werkstückes in schematischer Darstellung;
- Fig 2: eine seitliche Darstellung der Vorrichtung aus FIG 1.

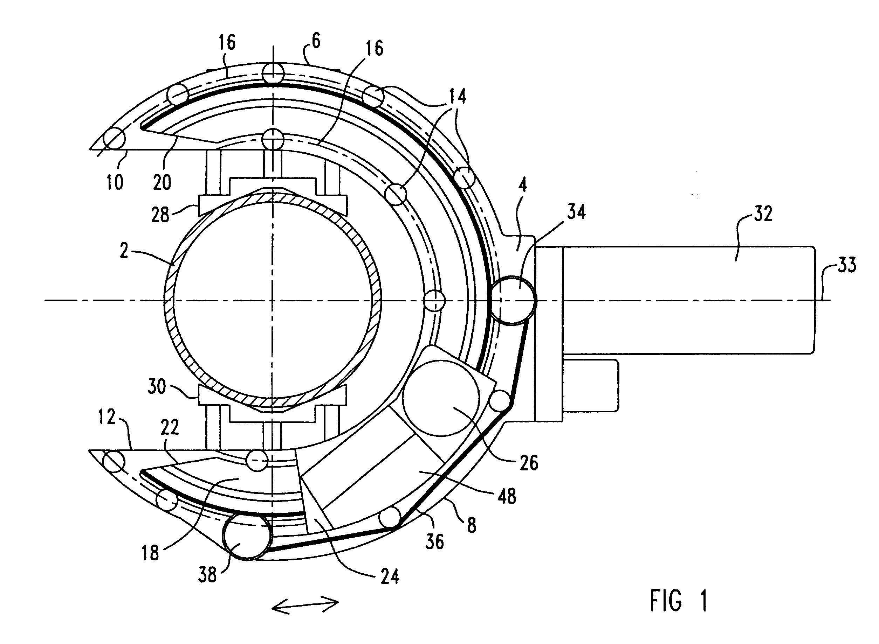

Gemäß Figur 1 umfaßt eine Vorrichtung zum Prüfen und/oder Bearbeiten eines rohrförmigen Werkstückes 2 einen Basisträger 4, der zwei kreissegmentförmige Schenkel 6 und 8 mit freien Enden 10 bzw. 12 besitzt. Auf dem Basisträger 4 sind entlang von zwei konzentrischen Kreissegmenten Laufrollen 14 angeordnet, die eine Führung 16 bilden. Die Achsen der Laufrollen 14 sind parallel zur Längsachse des Werkstückes 2 ausgerichtet. Die Führung 16 legt eine kreisförmige Bahn für ein in ihr verfahrbares Laufsegment 18 fest.

Das Laufelement 18 hat die Gestalt eines Ringelements mit freien Enden 20 und 22 und kann in dieser Führung 16 auf einer Kreisbahn um das rohrförmige Werkstück 2 verfahren werden. Die Laufrollen 14 ermöglichen ein spielfreies Verfahren des Laufsegmentes 12 auf dem Basisträger 4. Das Laufsegment 18 dient zum Überbrücken des Raumes zwischen den freien Enden 10 und 12 der Schenkel 6 bzw. 8. Das Laufsegment 18 ist dabei so dimensioniert, daß seine Kreisbogenlänge größer ist als die Kreisbogenlänge zwischen den freien Enden 10 und 12 der Schenkel 6 bzw. 8 des Basisträgers 4. Demzufolge wird das freie Ende 22 des Laufsegments 18 bereits von den Laufrollen 14 des Schenkels 6 des Basisträgers 4 erfaßt, während das freie Ende 20 des Laufsegments 18 noch von den Führungsrollen 14 des Schenkels 8 des Basisträgers 4 geführt wird. Dadurch kann das Laufsegment 18 um den gesamten Umfang des rohrförmigen Werkstücks 2 verfahren werden.

Auf dem Laufsegment 18 ist in einem vorgegebenen Abstand eine vergleichsweise kurze Tragplatte 23 angeordnet. Das Laufelement 18 dient somit als Fahrgestell für die Tragplatte 23. Laufsegment 18 und Tragplatte 23 bilden einen Träger 24 für einen Ausleger 26, der sich im wesentlichen parallel zum rohrförmigen Werkstück 2 erstreckt. Der Ausleger 26 kann vom Träger 24 um den gesamten Umfang des Werkstückes 2 verfahren werden.

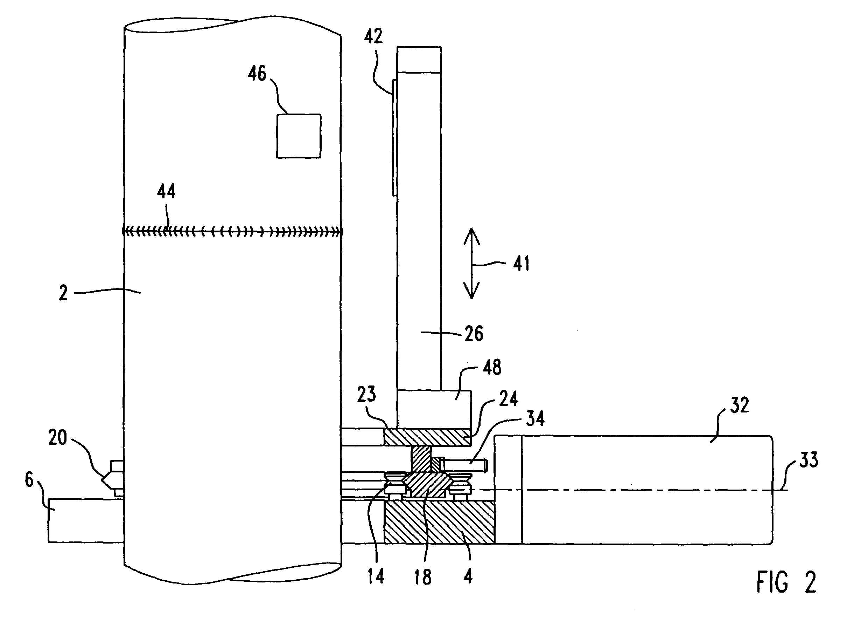

Zwei Spannpratzen 28 und 30 sind für eine Fixierung und mittige Ausrichtung des Basisträgers 4 außen am rohrförmigen Werkstück 2 vorgesehen. Nach Fixierung des Basisträgers 4 am rohrförmigen Werkstück 2 kann dieses auf seinem gesamten Umfang (mit einem System 42, vergl. FIG 2) geprüft und/oder bearbeitet werden. Ein rohrförmiges Werkstück 2, insbesondere eine Rohrleitung, ist häufig in Wandnähe und in Ecken angeordnet und somit für eine Prüfung und/oder Bearbeitung auf dem gesamten Umfang schwer zugänglich. Mit dieser gewichtsmäßig leichten Vorrichtung, bei der eine geringe radiale Bauhöhe erreichbar ist, kann auch eine solche Rohrleitungen der Bearbeitung zugänglich gemacht werden. Damit ist eine weitgehend universelle Einsetzbarkeit gegeben. Mit einer solchen Vorrichtung können konisch verlaufende rohrförmige Werkstücke oder Rohre im Krümmerbereich geprüft und/oder bearbeitet werden.

Zum Antreiben des verfahrbaren Laufsegmentes 18 ist ein erster Motor 32 vorgesehen, dessen Motorwellenachse 33 radial zu der Kreisbahn an dem Basisträger 4 angeordnet ist und dessen Gehäuse zugleich als Haltegriff für den Basisträger 4 dient. Der erste Motor 32 treibt ein erstes Antriebsritzel 34 an, das in eine Verzahnung am Laufsegment 18 eingreift. Über einen Zahnriemen 36 wird ein zweites Antriebsritzel 38 angetrieben, das in der Nähe des freien Endes 12 des Schenkels 8 angeordnet ist und zum Antreiben des Laufsegments 18 beim Überbrücken des Raumes zwischen den freien Enden 10 und 12 des Basisträgers 4 dient.

Gemäß Figur 2 ist auf dem Ausleger 26 ein in dessen Längsrichtung 41 verfahrbares, fernbedienbares Prüf- und/oder Bearbeitungssystem 42 angeordnet, mit dem eine Schweißnaht 44 und/oder eine lokale Fehlerstelle 46 geprüft und/oder bearbeitet werden kann. Die Translationsbewegung erfolgt senkrecht zur Rotationsbewegung. Zum Verfahren des Prüf- und/oder Bearbeitungssystems 42 ist auf dem Träger 24 ein zweiter Motor 48 angeordnet, der mit einem Inkremental-Drehgeber gekoppelt ist und eine im Ausleger 26 gelagerte Gewindespindel antreibt. Der Ausleger 26 ist um eine parallel zur Ebene des Basisträgers 4 verlaufende Achse schwenkbar, so daß das Prüf- und/oder Bearbeitungssystem 42 auf der Oberfläche des rohrförmigen Werkstückes 2 aufliegen kann. Nach einer einzigen Fixierung der Vorrichtung am rohrförmigen Werkstück 2 kann demzufolge je nach geometrischer Auslegung des Auslegers 26 eine größere Fläche auf dem Umfang des rohrförmigen Werkstückes 2 geprüft und/oder bearbeitet werden. Sollen verschiedene Funktionen des Prüfens und Bearbeitens ausgeführt werden, z. B. die Ultraschall-Prüfung des rohrförmigen Werkstückes 2, so ist es ausreichend, vor Ort das verfahrbare Prüf- und/oder Bearbeitungssystem 42 gegen ein anderes Bearbeitungssystem 42 auszuwechseln.

## Patentansprüche

1. Vorrichtung zum Prüfen und/oder Bearbeiten eines rohrförmigen Werkstückes (2), mit einem Basisträger (4), der zwei Schenkel (6,8) mit freien Enden (10 bzw. 12) besitzt, und der eine Führung (16) für einen auf einer Kreisbahn verfahrbaren Träger (24) für ein Prüf- bzw. Bearbeitungssystem (42) umfaßt,
**dadurch gekennzeichnet,**
daß auf dem Träger (24) ein Ausleger (26) für das Prüf- bzw. Bearbeitungssystem (42) angeordnet ist, wobei das Prüf- bzw. Bearbeitungssystem (42) auf dem Träger (24) verfahrbar angeordnet ist, und
daß zum Verfahren des Trägers (24) ein in der Führung (16) gelagertes, kreisförmig gebogenes Laufsegment (18) zum Überbrücken des Raumes zwischen den freien Enden (10,12) der Schenkel (6,8) des Basisträgers (4) vorgesehen ist, wobei die Kreisbogenlänge des Laufsegments (18) größer ist als die Kreisbogenlänge zwischen den freien Enden (10, 12).

2. Vorrichtung nach Anspruch 1, bei der auf dem Basisträger (4) Laufrollen (14) als Führung (16) für das Laufsegment (18) angeordnet sind.

3. Vorrichtung nach Anspruch 1 oder 2, bei der die Motorwellenachse (33) eines ersten Motors (32) zum Antreiben des verfahrbaren Trägers (24) radial zu der Kreisbahn an dem Basisträger (4) ausgerichtet ist.

4. Vorrichtung nach einem der vorhergehenden Ansprüche, bei der der Ausleger (26) im wesentlichen senkrecht zur Ebene der Kreisbahn positionierbar ist.

5. Vorrichtung nach einem der vorhergehenden Ansprüche, bei der ein mit einem Inkremental-Drehgeber gekoppelter zweiter Motor (48), der das Prüf- und/oder Bearbeitungssystem (42) über eine Gewindespindel antreibt, vorgesehen ist.

6. Vorrichtung nach einem der vorhergehenden Ansprüche, bei der mindestens zwei Spannpratzen (28,30) für eine Fixierung und mittige Ausrichtung des Basisträgers (4) am rohrförmigen Werkstück (2) vorgesehen sind.

7. Verfahren zum Prüfen und/oder Bearbeiten eines rohrförmigen Werkstückes (2),
a) bei dem ein Basisträger (4) mit mindestens zwei Spannpratzen (28,30) am rohrförmigen Werkstück (2) zentriert wird, wobei der Basisträger (4) zwei Schenkel (6,8) mit freien Enden (10,12) besitzt und eine Führung (16) für ein in ihr auf einer Kreisbahn verfahrbares Laufsegment (18) eines Trägers (24) für einen Ausleger (26) umfaßt, wobei die Kreisbogenlänge des Laufsegments (18) größer ist als die Kreisbogenlänge zwischen den freien Enden (10, 12), und
b) bei dem ein auf dem Ausleger (26) angeordnetes verfahrbares Prüf- bzw. Bearbeitungssystem (42) verfahren wird.

8. Verfahren nach Anspruch 7, bei dem mit dem auf einer Kreisbahn verfahrbaren Laufsegment (18) des Trägers (24) der Raum zwischen den freien Enden (10,12) der Schenkel (6,8) des Basisträgers (24) überbrückt wird.

## Claims

1. Device for inspecting and/or machining a tubular workpiece (2), having a base support (4), which has two limbs (6, 8) having free ends (10 and 12 respectively) and which surrounds a guide (16) for a support (24) for an inspecting and machining system (42), which support can move on a circular path, characterised in that arranged on the support (24) is an extension arm (26) for the inspecting and machining system (42), with the inspecting and machining system (42) being arranged movably on the support (24), and in that in order to move the support (24), there is provided a travelling segment (18), which is mounted in the guide (16) and bent into a circular shape, for bridging the space between the free ends (10, 12) of the limbs (6, 8) of the base support (4), with the circular-arc length of the travelling segment (18) being greater than the circular-arc length between the free ends (10, 12).

2. Device according to claim 1, in which arranged on the base support (4) are rollers (14) as a guide (16) for the travelling segment (18).

3. Device according to claim 1 or 2, in which the motor shaft axis (33) of a first motor (32) for driving the movable support (24) is aligned radially with respect to the circular path on the base support (4).

4. Device according to one of the preceding claims, in which the extension arm (26) can be positioned substantially at right angles to the plane of the circular path.

5. Device according to one of the preceding claims, in which there is provided a second motor (48), which is coupled to an incremental rotary transducer and drives the inspecting and/or machining system (42) by way of a threaded spindle.

6. Device according to one of the preceding claims, in which there are provided at least two clamping claws (28, 30) for fixing and central alignment of the base support (4) on the tubular workpiece (2).

7. Method for inspecting and/or machining a tubular workpiece (2),
a) in which a base support (4) having at least two clamping claws (28, 30) is centred on the tubular workpiece (2), with the base support (4) having two limbs (6, 8), which have free ends (10, 12), and surrounding a guide (16) for a travelling segment (18) of a support (24) for an extension arm (26), which travelling segment can move in the said guide on a circular path, with the circular-arc length of the travelling segment (18) being greater than the circular-arc length between the free ends (10, 12), and
b) in which a movable inspecting and machining system (42) arranged on the extension arm (26) is moved.

8. Method according to claim 7, in which the space between the free ends (10, 12) of the limbs (6, 8) of the base support (24) [sic] is bridged with the travelling segment (18) of the support (24), which travelling segment can move on a circular path.

## Revendications

1. Dispositif pour vérifier une pièce tubulaire (2) ou pour y effectuer des opérations, ayant un support de base (4) comportant deux branches (6, 8) avec des extrémités libres (10 ou 12), et un guidage (16) pour un support (24) pouvant être déplacé sur une trajectoire circulaire destiné à un système (42) pour vérifier une pièce tubulaire ou pour y effectuer des opérations,
caractérisé par le fait que
une console (26) est montée sur le support (24) du système (42) pour vérifier une pièce tubulaire ou pour y effectuer des opérations, le système (42) pour vérifier une pièce tubulaire ou pour y effectuer des opérations étant monté sur le support (24) de façon à pouvoir être déplacé, et
que, pour le déplacement du support (24), il est prévu un segment de roulement (18) incurvé de façon circulaire, monté dans le guidage (16) et destiné à recouvrir l'espace compris entre les extrémités libres (10, 12) des branches (6, 8) du support de base (4), la longueur de l'arc de cercle du segment de roulement (18) étant supérieure à la longueur de l'arc de cercle compris entre les extrémités libres (10, 12).

2. Dispositif selon la revendication 1, dans lequel des galets de roulement (14) sont montés sur le support de base (4) en tant que guidage (16) pour le segment de roulement (18).

3. Dispositif selon la revendication 1 ou 2, dans lequle l'axe (33) de l'arbre d'un premier moteur (32) destiné à l'entraînement du support mobile (24) est dirigé radialement par rapport à la trajectoire circulaire sur le support de base (4).

4. Dispositif selon l'une quelconque des revendications précédentes, dans lequel la console (26) peut être disposée en étant sensiblement perpendiculaire au plan de la trajectoire circulaire.

5. Dispositif selon l'une quelconque des revendications précédentes, dans lequel il est prévu un second moteur (48), qui est couplé à un transmetteur de rotation incrémentielle et qui entraîne, par l'intermédiaire d'une broche filetée, le système (42) pour vérifier une pièce tubulaire ou pour y effectuer des opérations.

6. Dispositif selon l'une quelconque des revendications précédentes, dans lequel au moins deux griffes de serrage (28, 30) sont prévues pour une fixation et un alignement centré du support de base (4) sur la pièce tubulaire (2).

7. Procédé pour vérifier une pièce tubulaire ou pour y effectuer des opérations,
a) dans lequel un support de base (4) est centré sur la pièce tubulaire (2) par au moins deux griffes de serrage (28, 30),
le support de base (4) comportant deux branches (6, 8) avec des extrémités libres (10, 12), et un guidage (16) pour un segment de roulement (18) pouvant être déplacé dans ce guidage sur une trajectoire circulaire d'un support (24) d'une console (26), la longueur de l'arc de cercle du segment de roulement (18) étant supérieure à la longueur de l'arc de cercle compris entre les extrémités libres (10, 12), et
b) dans lequel un système (42) mobile pour vérifier une pièce tubulaire ou pour y effectuer des opérations et monté sur la console (26), est déplacé.

8. Procédé selon la revendication 7, dans lequel l'espace situé entre les extrémités libres (10, 12) des branches (6, 8) du support de base (4) est recouvert par le segment de roulement (18) pouvant être déplacé sur une trajectoire circulaire du support (24).
